# FASCICULE DE BREVET EUROPEEN

(11) **EP 1 719 699 B1**
(45) Date de publication et mention de la délivrance du brevet: **09.06.2010**
(21) Numéro de dépôt: 06112524.1
(22) Date de dépôt: 12.04.2006
(51) Int. Cl.: B64C 11/20, F01D 5/14, F01D 5/28, B64C 27/02

(54) **Pièce pour protéger le bord d'attaque d'une pale**
Schutzteil für die Vorderkante eines Blattes
Protection piece for the leading edge of a blade

(30) Priorité: 15.04.2005 FR 0503780
(43) Date de publication de la demande: 08.11.2006
(73) Titulaire: SNECMA, 75015 Paris (FR)
(72) Inventeur: BERNARD, Jacques, 77000, VAUX LE PENIL (FR); MONS, Claude, 77176, SAVIGNY LE TEMPLE (FR); PESLERBE, Isabelle, 91340, OLLAINVILLE (FR); THOMAS, Thierry, 93370, MONTFERMEIL (FR)
(74) Mandataire: Barbin le Bourhis, Joël

(56) Documents cités:
- EP-A- 0 816 637
- DE-A1- 4 137 839
- GB-A- 2 242 848
- US-A- 3 762 835
- US-A- 4 010 530
- US-A- 4 627 896
- US-A- 5 511 603
- US-A1- 2003 009 870

## Description

L'invention a pour objet une pièce de protection utilisée, par exemple, pour protéger le bord d'attaque d'une pale d'aube de turbomachine, d'une pale d'hélice ou d'une pale d'hélicoptère.

Dans le domaine de l'aéronautique et, plus particulièrement, celui des turboréacteurs d'avion, diminuer la masse des éléments constitutifs du turboréacteur est une préoccupation constante.

Ainsi, on a développé des aubes de soufflante ou de redresseur de turboréacteur, dont les pales sont réalisées en matériau composite à matrice organique (par exemple à partir de résine époxy, bismaléimide ou cyanate-ester), de sorte que ces pales sont plus légères que les pales métalliques.

Toutefois, le bord d'attaque de ces pales doit être protégé contre l'érosion et contre d'éventuels impacts par une pièce de protection rapportée sur ce bord.

A ce jour, on utilise des pièces de protection réalisées en alliage de titane de type TA6V. Cette solution est techniquement viable, cet alliage présentant une bonne résistance à l'érosion et aux impacts. Toutefois, on estime que le poids de ces pièces est trop élevé.

D'autres solutions connues consistent à utiliser des pièces de Protection en acier, voir DE 41 37 839 A1 sur lequel le préambule de la revendication 1 se base, ou en nickel (voir US 3 762 834).

L'invention a pour but de proposer des pièces de protection de poids inférieur aux pièces en alliage de titane connues, qui soient suffisamment résistantes pour assurer leur rôle de protection.

Pour atteindre ce but, l'invention a pour objet une pièce de protection du bord d'attaque d'une pale telle que définie dans la revendication 1.

Cette pièce de protection présente une face externe de protection en un alliage d'aluminium renforcé par des particules de SiC, la proportion des particules de SiC dans ledit alliage variant de 15 à 40 % en poids et, avantageusement, de 15 à 30 % en poids.

La masse volumique des alliages d'aluminium renforcés en SiC est d'environ 40 % inférieure à celle des alliages de titane généralement utilisés. Il en résulte un gain de masse significatif qui permet, entre autres, de limiter les contraintes dues aux forces centrifuges s'exerçant sur les moyeux des disques porteurs d'aubes. On peut alors concevoir des disques moins résistants et plus légers et, ainsi, diminuer encore le poids du turboréacteur.

Les particules de SiC permettent d'améliorer la résistance mécanique de l'aluminium, Au-dessous de 15 % de SiC, cette résistance n'est pas suffisante. Au-dessus de 40 % de SiC, l'alliage est trop difficile à mettre en forme. Avantageusement, on reste au-dessous de 30 % de SiC pour faciliter la mise en forme.

La pièce de protection de l'invention comporte au moins deux couches 1 dont une couche externe et une couche interne, la couche externe étant réalisée en ledit alliage d'aluminium renforcé et la couche interne étant réalisée en un alliage d'aluminium renforcé ou non en particules de SiC, la proportion des particules de SiC à l'intérieur des couches augmentant de la couche interne vers la couche externe. Ainsi, la résistance mécanique augmente de l'intérieur vers l'extérieur de la pièce.

Le fait d'avoir un alliage d'aluminium peu renforcé, ou non renforcé, au niveau de la couche interne, permet de faciliter la fixation de cette couche sur la pale. Ceci est particulièrement vrai lorsque cette pale est en matériau composite à matrice organique (par opposition aux composites à matrice métallique) et que la pièce de protection est collée sur celle-ci. Dans la pratique, pour fixe, la pièce de protection de l'invention, il est possible d'utiliser les colles et les techniques de collage qui sont déjà utilisées pour fixer les pièces de protection en alliage de titane TA6V. Il n'est donc pas nécessaire de développer des colles spécifiques pour la pièce de l'invention.

La pièce de protection de l'invention a été plus particulièrement développée pour être rapportée sur une pale réalisée en matériau composite et, notamment, en matériau composite à matrice organique. Toutefois, elle peut être rapportée sur une pale réalisée en un autre type de matériau.

L'invention et ses avantages seront mieux compris à la lecture de la description détaillée qui suit, qui fait référence à la planche de figures annexée sur laquelle :
- la figure 1 est une vue en perspective d'une pale, sectionnée transversalement, sur le bord de laquelle une pièce de protection selon l'invention a été rapportée; et
- la figure 2 est une vue de détail agrandie de la section transversale de la pale de la figure 1.

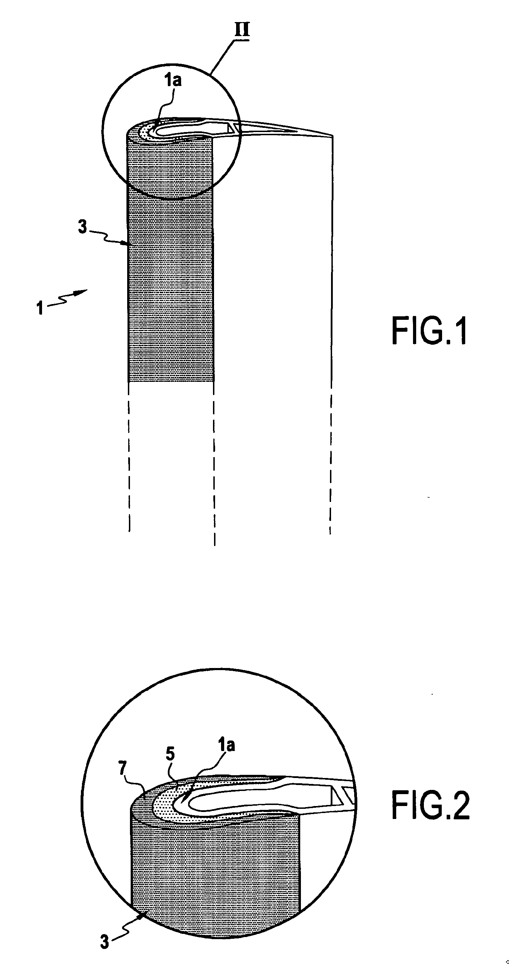

Les figures 1 et 2 représentent une pale 1 d'aube de turbomachine. Le bord d'attaque 1a de cette pale 1 est recouvert par une pièce de protection 3 selon l'invention.
La pièce de protection 3 présente une section sensiblement en forme de U lui permettant d'être positionnée à cheval sur le bord d'attaque 1a de la pale 1. La pièce 3 est formée de deux couches, une couche interne 5 et une couche externe 7. La couche externe 7 est en alliage d'aluminium renforcé en particules de SiC, tandis que la couche interne 5 est réalisée dans le même alliage d'aluminium, non renforcé en SiC. De préférence, pour les applications aéronautiques, on choisit un alliage d'aluminium de la série 7000.

Bien entendu, la pièce de protection peut comporter plus de deux couches, la proportion de particules de SiC dans chaque couche augmentant de l'intérieur vers l'extérieur. Ainsi, selon un exemple de réalisation non représenté, la pièce de protection est formée de quatre couches C1, C2, C3 et C4 avec une proportion de SiC nulle dans la couche interne C1, d'environ 10 % en poids dans C2, d'environ 20 % dans C3 et d'environ 30 % dans la couche externe C4.

Pour assembler entre elles les couches de la pièce de protection, diverses techniques peuvent être employées.

Avantageusement, on utilise le cofilage ou le colaminage, ces deux techniques fonctionnant bien avec les alliages d'aluminium, renforcés ou non en SiC.

Le cofilage consiste à faire passer à l'intérieur d'une filière (un cône de réduction) une barre en alliage d'aluminium non renforcé, entourée par un manchon en alliage d'aluminium renforcé en SiC. Les forces de compression et l'échauffement générés par les frictions entre les deux matériaux à leur interface, assurent la liaison intime de ces deux matériaux. On obtient ainsi une barre avec un coeur en alliage d'aluminium non renforcé et une enveloppe en alliage d'aluminium renforcé en SiC. La barre ainsi obtenue peut ensuite être mise en forme, par exemple par matriçage.

Le colaminage consiste, quant à lui, à presser ensemble pour les lier, à chaud ou à froid, plusieurs plaques en alliages d'aluminium. Pour obtenir une pièce de protection 3 comme celle de la figure 1 avec deux couches 5 et 7, une plaque en alliage d'aluminium renforcé en SiC est pressée avec une plaque en alliage d'aluminium non renforcé. On utilise généralement deux rouleaux cylindriques entre lesquels on fait passer lesdites plaques. Ensuite, on met en forme la plaque finale (en forme de U), par exemple par forgeage ou par matriçage.

Une fois la pièce de protection 3 mise en forme, elle est collée sur le bord d'attaque 1a de la pale 1.

Pour réaliser ledit manchon ou ladite plaque en alliage d'aluminium renforcé en SiC, on utilise les techniques connues de métallurgie des poudres, consistant à mélanger une poudre d'alliage d'aluminium, avec une poudre de SiC, et à densifier ce mélange de poudre, par exemple par frittage, pour lui donner la forme souhaitée.

La pale 1 est une pale d'aube de turbomachine. Plus particulièrement, il peut s'agir d'une pale d'aube de soufflante ou de redresseur de turboréacteur. On définit généralement la pale d'une aube comme étant la partie de l'aube qui surmonte le pied d'aube et le pied d'aube comme étant la partie par laquelle l'aube est retenue par rapport au reste de la turbomachine.

Lorsque la pale 1 est une aube de soufflante, celle-ci peut-être réalisée par injection de résine sur une préforme fibreuse. La préforme fibreuse et la résine forment alors, respectivement, le renfort fibreux et la matrice du matériau composite obtenu. La préforme fibreuse peut être obtenue, notamment, par tissage et plusieurs procédés connus d'injection de résine sur préforme fibreuse peuvent être utilisés, parmi lesquels le procédé de moulage par transfert de résine, dit procédé "RTM" pour "Resin Transfert Molding".

La pale 1 pourrait également être une pale d'hélice ou une pale d'hélicoptère.

## Revendications

1. Pièce de protection du bord d'attaque (1a) d'une pale (1) présentant une face externe de protection en un alliage d'aluminium renforcé par des particules de SiC, la proportion des particules de SiC dans ledit alliage variant de 15 à 40 % en poids, **caractérisée en ce qu'**elle comporte au moins deux couches dont une couche externe (7) et une couche interne (5), la couche externe étant réalisée en ledit alliage d'aluminium renforcé et la couche interne étant réalisée en un alliage d'aluminium renforcé ou non en particules de SiC, la proportion des particules de SiC à l'intérieur des couches augmentant de la couche interne vers la couche externe.

2. Pièce de protection selon la revendication 1, **caractérisée en ce que** la proportion des particules de SiC dans ledit alliage varie de 15 à 30 % en poids.

3. Pièce de protection selon la revendication 1 ou 2, **caractérisée en ce qu'**elle comporte au moins deux couches (5, 7) et **en ce que** ces couches sont assemblées entre elles par cofilage ou par colaminage.

4. Pièce de protection selon l'une quelconque des revendications précédentes, **caractérisée en ce qu'**elle présente une section sensiblement en forme de U.

5. Utilisation d'une pièce de protection selon l'une quelconque des revendications précédentes, pour protéger le bord d'attaque (1a) d'une pale d'aube de turbomachine, d'une pale d'hélicoptère ou d'une pale d'hélice.

6. Ensemble comprenant une pale (1) présentant un bord d'attaque (1a) et une pièce de protection (3) selon l'une quelconque des revendications 1 à 4, rapportée sur le bord d'attaque (1a) pour le protéger.

7. Ensemble selon la revendication 6, **caractérisé en ce que** ladite pièce de protection (3) est collée sur le bord d'attaque (1a).

8. Ensemble selon la revendication 6 ou 7, **caractérisé en ce que** ladite pale (1) est réalisée en un matériau composite à matrice organique.

## Claims

1. A protection part for protecting the leading edge (1a) of a blade (1), presenting an outer protection face made of an aluminum alloy reinforced by particles of SiC, the SiC particle content in said alloy lying in the range 15% to 40% by weight, the protection part being **characterized in that** it comprises at least two layers, including an outer layer (7) and an inner layer (5), the outer layer being made of said reinforced aluminum alloy and the inner layer being made of an aluminum alloy that is optionally reinforced with SiC particles, the content of SiC particles in the layers increasing from the inner layer to the outer layer.

2. A protection part according to claim 1, **characterized in that** the content of SiC particles in said alloy lies in the range 15% to 30% by weight.

3. A protection part according to claim 1 or claim 2, **characterized in that** it comprises at least two layers (5, 7), and **in that** the layers are assembled together by co-extrusion or by roll-bonding.

4. A protection part according to any preceding claim, **characterized in that** it presents a section that is substantially U-shaped.

5. Use of a protection part according to any preceding claim, for protecting the leading edge (1a) of a turbomachine blade or vane, of a helicopter blade, or of a propeller blade.

6. An assembly comprising a blade (1) presenting a leading edge (1a) and a protection part (3) according to any one of claims 1 to 4, fitted onto the leading edge (1a) in order to protect it.

7. An assembly according to claim 6, **characterized in that** said protection part (3) is bonded on the leading edge (1a) by adhesive.

8. An assembly according to claim 6 or claim 7, **characterized in that** the blade (1) is made of an organic-matrix composite material.

## Patentansprüche

1. Teil zum Schutz der Eintrittskante (1a) eines Schaufelblattes (1), welches Teil eine Schutzaußenseite aus einer durch SiC-Partikel verstärkten Aluminiumlegierung aufweist, wobei der Anteil der SiC-Partikel in der Legierung zwischen 15 und 40 Gew.-% schwankt, **dadurch gekennzeichnet, daß** es wenigstens zwei Schichten, darunter eine Außenschicht (7) und eine Innenschicht (5) umfaßt, wobei die Außenschicht aus der verstärkten Aluminiumlegierung und die Innenschicht aus einer mit SiC-Partikeln verstärkten oder nicht mit SiC-Partikeln verstärkten Aluminiumlegierung besteht, wobei der Anteil der SiC-Partikel innerhalb der Schichten von der Innenschicht zur Außenschicht hin zunimmt.

2. Schutzteil nach Anspruch 1, **dadurch gekennzeichnet, daß** der Anteil der SiC-Partikel in der Legierung zwischen 15 und 30 Gew.-% schwankt.

3. Schutzteil nach Anspruch 1 oder 2, **dadurch gekennzeichnet, daß** es wenigstens zwei Schichten (5, 7) umfaßt und daß diese Schichten durch Co-Extrudieren oder durch Zusammenwalzen untereinander verbunden sind.

4. Schutzteil nach einem der vorhergehenden Ansprüche, **dadurch gekennzeichnet, daß** es einen im wesentlichen U-förmigen Querschnitt aufweist.

5. Verwendung eines Schutzteils nach einem der vorhergehenden Ansprüche, zum Schutz der Eintrittskante (1a) eines Schaufelblattes der Schaufel einer Turbomaschine, eines Hubschrauberschaufelblattes oder eines Propellerschaufelblattes.

6. Anordnung umfassend ein Schaufelblatt (1), das eine Eintrittskante (1a) aufweist, sowie ein Schutzteil (3) nach einem der Ansprüche 1 bis 4, welches an die Eintrittskante (1a) angesetzt ist, um diese zu schützen.

7. Anordnung nach Anspruch 6, **dadurch gekennzeichnet, daß** das Schutzteil (3) an die Eintrittskante (1a) angeklebt ist.

8. Anordnung nach Anspruch 6 oder 7, **dadurch gekennzeichnet, daß** das Schaufelblatt (1) aus einem Verbundwerkstoff mit organischer Matrix besteht.
